# EUROPEAN PATENT APPLICATION

(11) **EP 1 487 216 A2**
(43) Date of publication of application: **15.12.2004**
(21) Application number: 04013760.6
(22) Date of filing: 11.06.2004
(51) Int. Cl.: H04N 7/24

(54) **Device and method for receiving and transmitting digital multimedia broadcasting**

(30) Priority: 14.06.2003 KR 2003038527
(71) Applicant: LG ELECTRONICS INC., Seoul (KR)
(72) Inventor: Yang, Yoon Seok, Anyang-si Gyeonggi-do (KR); Lee, Chul Soo, Seoul-si (KR)
(74) Representative: Vetter, Ewald Otto

(57) **Abstract**

A device and method for receiving and transmitting digital multimedia broadcasting is disclosed. The transmitting device includes an MPEG4 system including at least one of an ES_Descriptor of an audio object and an ES_Descriptor of a visual object at a set position of an Initial Object Descriptor (IOD) syntax, and encoding data indicated by the IOD using MPEG4 compression algorithms, and an MPEG2 system including the IOD in a Program Specific Information (PSI) table, and encoding the PSI table and data received from the MPEG4 system into an MPEG2 mode and transmitting the encoded data.

## Description

### CROSS-REFERENCE TO RELATED APPLICATIONS

This application claims the benefit of Korean Application No. P2003-038527, filed on June 14, 2003, which is hereby incorporated by reference as if fully set forth herein.

### BACKGROUND OF THE INVENTION

### Field of the Invention

The present invention relates to a device and method for receiving and transmitting broadcasting, and more particularly, to a device and method for receiving and transmitting digital multimedia broadcasting. Although the present invention is suitable for a wide scope of applications, it is particularly suitable for receiving and displaying MPEG4-encoded A/V signals through a digital multimedia broadcasting (DMB) receiving device that does not entirely support the MPEG4 system.

### Discussion of the Related Art

Recently, as digital audio devices providing excellent sound quality, such as CDs and DVDs, are being widely supplied at a vast rate, consumers are increasingly demanding and requesting the provision of digital broadcasting, which requires high sound quality. Accordingly, in order to overcome the limitations in sound quality of the currently provided frequency modulation (FM) broadcasting, digital audio broadcasting (DAB) is being conducted in Europe, Canada, the United States of America, and many other countries. The digital audio broadcasting (DAB) system uses a technology completely different from that of the currently provided amplitude modulation (AM) broadcasting or frequency modulation (FM) broadcasting, so as to provide excellent sound quality. The DAB system also provides excellent receiving capacity even while the user is in a mobile state and has the characteristic of transmitting digital data, such as images and short messages, at a high speed. Recently, diversified multimedia services including both audio and video broadcasting are being emphasized, such services are referred to as digital multimedia broadcasting (DMB).

More specifically, when a DMB receiving device (or DMB receiver) or a DMB receiver pack is mounted on the mobile terminal, the mobile terminal can decode and display the moving picture encoded by using a compression algorithm. Accordingly, with the use of a mobile terminal, the user can be provided with a wide selection of multimedia services.

The MPEG4 is formed of a plurality of elements, among which ISO/IEC 14496-1, ISO/IEC 14496-3, and ISO/IEC 14496-10 are used in the digital multimedia broadcast (DMB). Herein, the first element includes an algorithm for coding and decoding synchronized information forming the contents, information required for forming the screen, and other systems. The second element consists of an algorithm compressing and recovering audio signal, and the third element consists of an algorithm compressing and recovering video signal.

Generally, the DMB transmitter uses the MPEG4 algorithm for compressing and encoding the data, so as to provide a wide range of services, and uses the system of the MPEG2 for the transmission of the compressed and encoded data. In other words, the DMB transmitter uses the MPEG2 system for multiplexing the transmission of an A/V broadcast and the synchronization of the contents required in each broadcast mode of the supplementary data are based on the MPEG4 system standard.

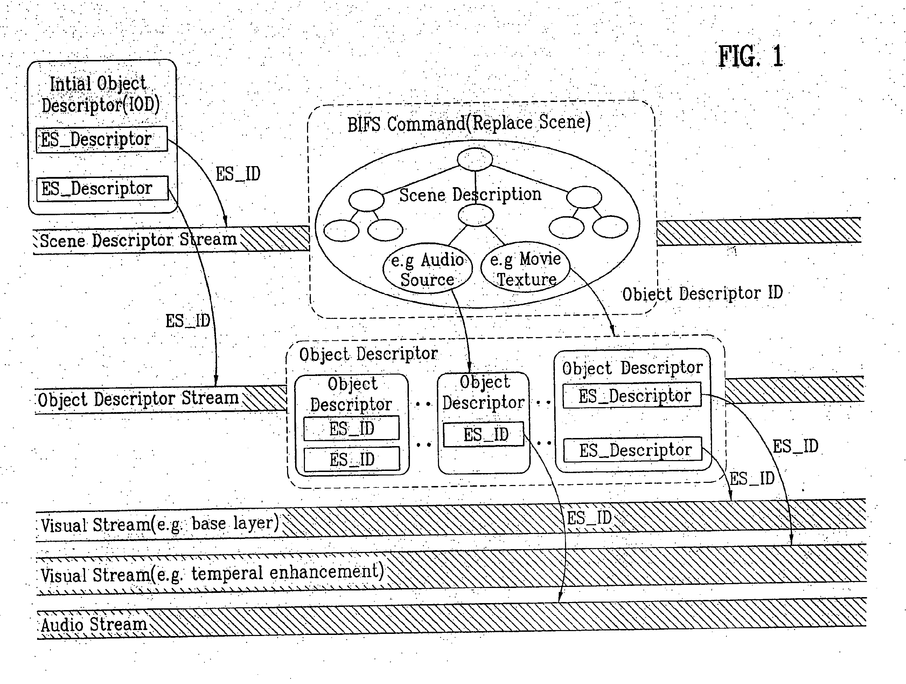

FIG. 1 illustrates a general structure of an MPEG4 type element stream supplied from the DMB receiver.

A syntax of an Initial Object Descriptor (IOD) *(i.e.,* an IOD syntax) defined in MPEG4 is shown below.

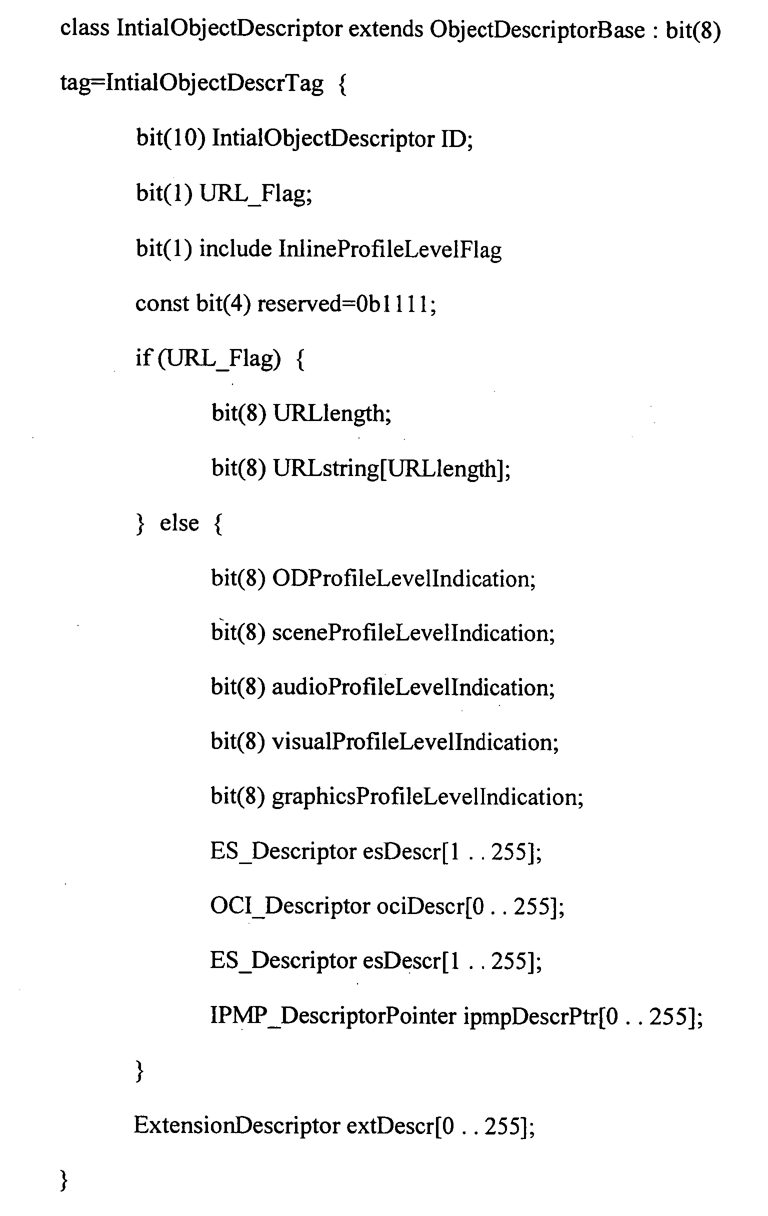

Referring to FIG. 1 and the IOD syntax, information on the Object Descriptor (OD) stream and information on the Scene Descriptor (SD) stream are included in the ES_descriptor field of the IOD. More specifically, the IOD acts as a pointer for connecting a Binary Format for Scene Description (BIFS) of the OD to the SD. The IOD syntax includes a stream type representing the data type, and a logical channel such as an Elementary Stream Identifier (ES_ID), which is a packet identification number corresponding to the stream type. For example, it can be assumed that a data type identified as ED_ID_103 included in the ES_Descriptor represents a stream including the SD information, and similarly, a data type identified as ES_ID_104 included in the ES_Descriptor is a stream including the OD information.

Also, the SD includes information on how to compose scenes, and the OD includesthe properties of objects. At this point, the SD data being the scene information provided by the ES_ID of the IOD includes the Binary Format for Scene (BIFS). And, the BIFS may include an information on interactive contents representation method allowing interaction with the user.

More specifically, the digital multimedia broadcasting (DMB) service was first introduced after the full-scale provision of multimedia services basically providing diverse user-interactive services. Therefore, in order to provide moving pictures and audio services as well as other various supplementary data to the user, the DMB should have interactivity with the users (*i.e.*, user-interactivity). When connected to diverse E-commerce services, user-interactivity is expected to become an essential element that can introduce a new type of business model

The BIFS is a binary language that represents the content structure of an MPEG4 having a tree structure. Herein, the BIFS is based on a virtual reality modeling language (VRML) which has been developed for representing interactive three (3)-dimensional graphic data.

As described above, the MPEG4 system of the DMB transmitter outputs MPEG4-encoded data to the MPEG2 system. Then, the MPEG2 system multiplexes the MPEG4-encoded data to an MPEG2 mode and transmits the MPEG2-multiplexed data to the DMB receiver. Subsequently, the MPEG4 system of the DMB receiver parses the IOD corresponding to the MPEG2 system from the data transmitted from the DMB receiver, and the MPEG4 system then receives the logical channel ES_ID of each of the Scene Descriptor (SD) representing the scene information and the Object Descriptor (OD) representing the object information. The MPEG4 system of the DMB receiver accesses to each logical channel ES_ID to obtain the scene information SD and the object information OD, thereby obtaining audio or video logical channels from the SD and OD. Furthermore, by using the PID defined in the MPEG2 system and the ES_ID defined in the MPEG4 system, the MPEG2 system of the DMB receiver identifies the audio stream and the video stream. Then, each of the identified streams are decoded and outputted to a screen for display.

However, despite the many advantages of the DMB service, the DMB related industry and markets are yet to be developed. One of the many reasons of such under development is because DMB receivers are not widely provided to the public to allow an easy and free viewing of the DMB signals. The technology used in the DMB required the most recently developed high-technology skills, thereby causing difficulty in the development of DMB receiving devices and increasing the product cost. Especially, the development of softwares related to data processing requires high expenses. Therefore, in order to actively initiate DMB service-related businesses, the prices of the DMB receiving devices should be lowered. Additionally, due to the difficulties in developing low costing DMB receiving devices, the active initiation of the DMB services will eventually be delayed. Therefore, users will only be able to view A/V signals compressed and encoded by using an MPEG4 algorithm through mobile terminals having the earlier models of DMB receiving devices mounted thereon. Also, users will need a device and method for receiving only A/V signals in a various product group.

### SUMMARY OF THE INVENTION

Accordingly, the present invention is directed to a device and method for receiving and transmitting digital multimedia broadcasting that substantially obviates one or more problems due to limitations and disadvantages of the related art.

An object of the present invention is to provide a device and method for receiving and transmitting digital multimedia broadcasting that can receive and display MPEG4-encoded A/V signals through a DMB receiver that does not entirely support the MPEG4 system.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a digital multimedia broadcasting transmitting device includes an MPEG4 system including at least one of an ES_Descriptor of an audio object and an ES_Descriptor of a visual object at a set position of an Initial Object Descriptor (IOD) syntax, and encoding data including data indicated by the IOD using MPEG4 compression algorithms, and an MPEG2 system including the IOD in a Program Specific Information (PSI) table, and encoding the PSI table and data received from the MPEG4 system into an MPEG2 mode and transmitting the MPEG2-encoded data.

Herein, the ES_Descriptor of the audio object and the ES_Descriptor of the visual object are included in an ES_Descriptor field of the IOD syntax.

Also, the IOD syntax further includes information on an audio stream and information on a visual stream.

Herein, the PSI table further comprises a Sync Layer (SL) Descriptor. And, the PSI table is a Program Map Table (PMT).

In addition, the MPEG2 system transmits the data through an orthogonal frequency division multiplexing (OFDM) method.

In another aspect of the present invention, a digital multimedia broadcasting (DMB) receiving device receiving DMB signals from a DMB transmitting device, which includes an MPEG4 system including at least one of an ES_Descriptor of an audio object and an ES_Descriptor of a visual object at a set position of an Initial Object Descriptor (IOD) syntax, and an MPEG2 system including the IOD in a Program Specific Information (PSI) table, includes an MPEG2 system parsing the PSI table from the DMB signals, and extracting the information on an audio stream and a visual stream by using the ES_Descriptor of the audio object and the ES_Descriptor of the visual object of the IOD within the parsed PSI table.

Herein, the digital multimedia broadcasting receiving device further includes Eureka-147 system performing frequency/time deinterleaving and error correction decoding of the received DMB signals, and outputting the decoded DMB signals to the MPEG2 system.

In another aspect of the present invention, a transmitting method of a digital multimedia broadcasting transmitting device, which includes an MPEG4 system including at least one of an ES_Descriptor of an audio object and an ES_Descriptor of a visual object at a set position of an Initial Object Descriptor (IOD) syntax, and an MPEG2 system including the IOD in a Program Specific Information (PSI) table, includes including at least one of an ES_Descriptor of an audio object and an ES_Descriptor of a visual object at a set position of an Initial Object Descriptor (IOD) syntax, encoding data indicated by the IOD using MPEG4 compression algorithms; and including the IOD in a Program Specific Information (PSI) table, and encoding the PSI table and data received from the MPEG4 system into an MPEG2 mode and transmitting the MPEG2-encoded data.

In a further aspect of the present invention, a receiving method of a digital multimedia broadcasting (DMB) receiving device receiving DMB signals from a DMB transmitting device, which includes an MPEG4 system including at least one of an ES_Descriptor of an audio object and an ES_Descriptor of a visual object at a set position of an Initial Object Descriptor (IOD) syntax, and an MPEG2 system including the IOD in a Program Specific Information (PSI) table, includes parsing the PSI table from the DMB signals, extracting the information on an audio stream and a visual stream by using the ES_Descriptor of the audio object and the ES_Descriptor of the visual object of the IOD within the parsed PSI table, and outputting the divided audio stream and visual stream, so as to be displayed.

The receiving method of a digital multimedia broadcasting (DMB) receiving device further includes prior to the parsing the PSI table from the DMB signals, receiving the DMB signals and performing frequency/time deinterleaving and error correction decoding of the received DMB signals.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:

FIG. 1 illustrates a general structure of a digital multimedia broadcasting (DMB) data; and

FIG. 2 illustrates a structure of a digital multimedia broadcasting (DMB) data according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The present invention relates to a device and method for receiving and transmitting digital multimedia broadcasting (DMB) that is suitable for receiving and displaying MPEG4-encoded A/V signals through a DMB receiving device that does not entirely support the MPEG4 system.

An ES_Descriptor part of the IOD syntax includes at least one of an ES_Descriptor of an audio object and an ES_Descriptor of a visual object.

The IOD syntax according to the present invention is shown below.

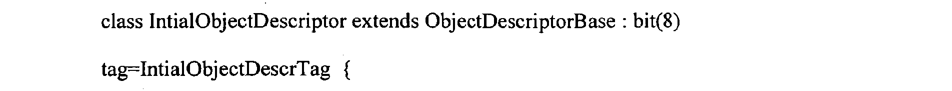

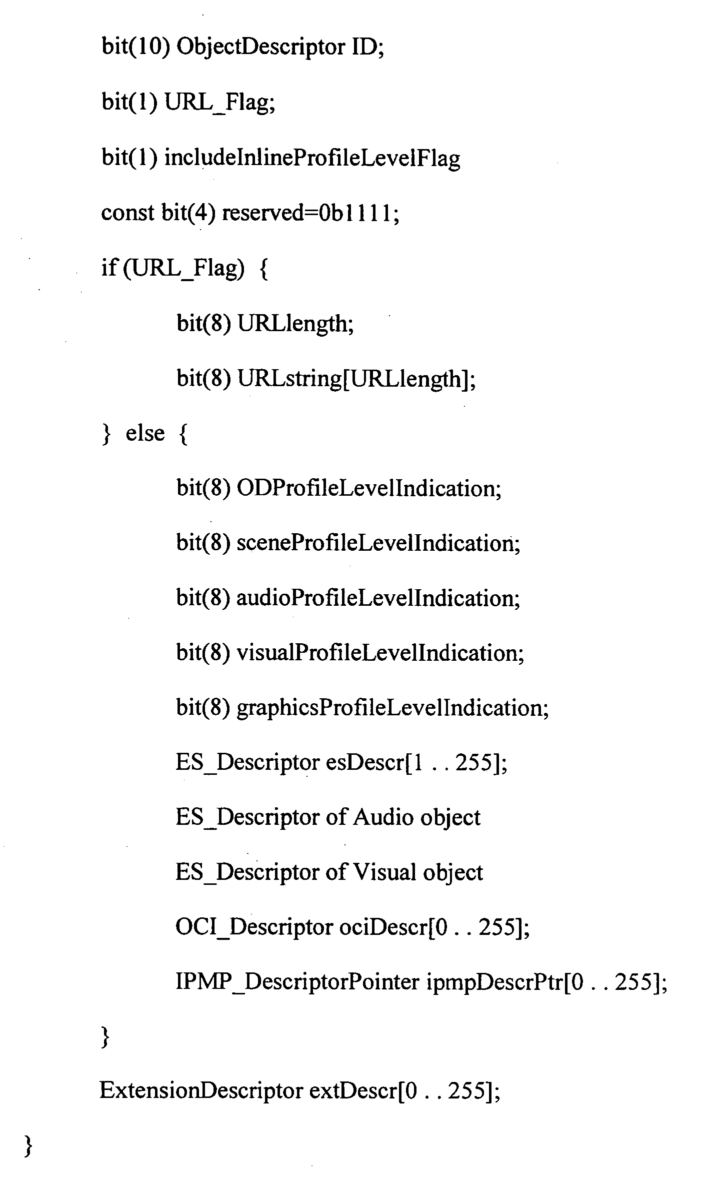

As described above, the DMB transmitting device (or DMB transmitter) according to the present invention includes at least one of an ES_Descriptor of an audio object and an ES_Descriptor of a visual object to the ES_Descriptor of the IOD syntax, thereby transmitting DMB signal to the DMB receiving device (or DMB receiver). Herein, the DMB transmitter includes an MPEG4 system and an MPEG2 system.

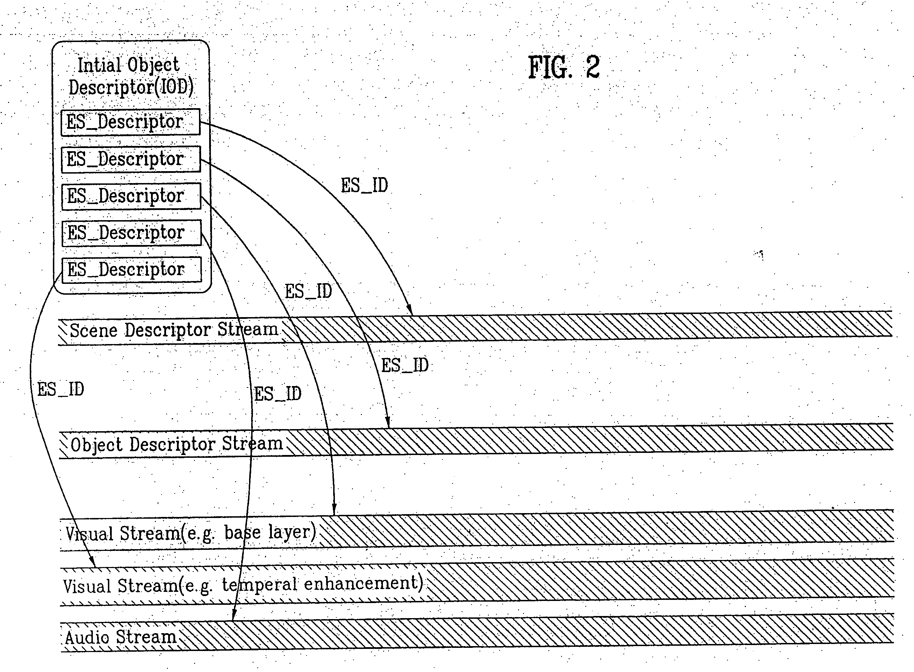

Referring to FIG. 2, the MPEG4 system includes at least one of an ES_Descriptor of the audio object and an ES_Descriptor of the visual object at a position of the Initial Object Descriptor (IOD) syntax, and the data indicated by the IOD is encoded by MPEG4 compression algorithms. Herein, the ES_Descriptor of the audio object and the ES_Descriptor of the visual object may be included in the ES_Descriptor field of the IOD syntax.

Herein, the IOD syntax includes information on the Object Descriptor (OD), information on the Scene Descriptor (SD), information on the audio stream, and information of the visual stream. Additionally, the information on the Scene Descriptor (SD) may include a Binary Format for Scene Description (BIFS) including information on an interactive contents representation method allowing interaction with the user.

Subsequently, in the MPEG2 system, the IOD is included in a program Specific Information (PSI) table. The PSI table and the date received from the MPEG4 system are MPEG2 encoded and transmitted. Herein, the PSI table is a Program Map Table (PMT), and the PMT may include the IOD and a Sync Layer (SL) Descriptor. Meanwhile, the PSI table includes information required by the DMB receiver according to the present invention. More specifically, in order to decode the received program received, the DMB receiver extracts the required information from the PSI table.

Among the PSI table, a Program Association Table (PAT) is an information transmitted by a packet identified as Program Identification (PID)=0. In other words, the PAT indicates and signifies the structural elements of a program for each of the corresponding program number, and the PAT refers to the PID of a transport packet transmitting the Program Map Table (PMT).

The Program Map Table (PMT) includes a program identification number, a PID list of transport packets, and supplementary information thereof. More specifically, the main role of the PMT is in the mapping of each individual PID and the required stream.

A PMT syntax in an MPEG2 TS is shown below.

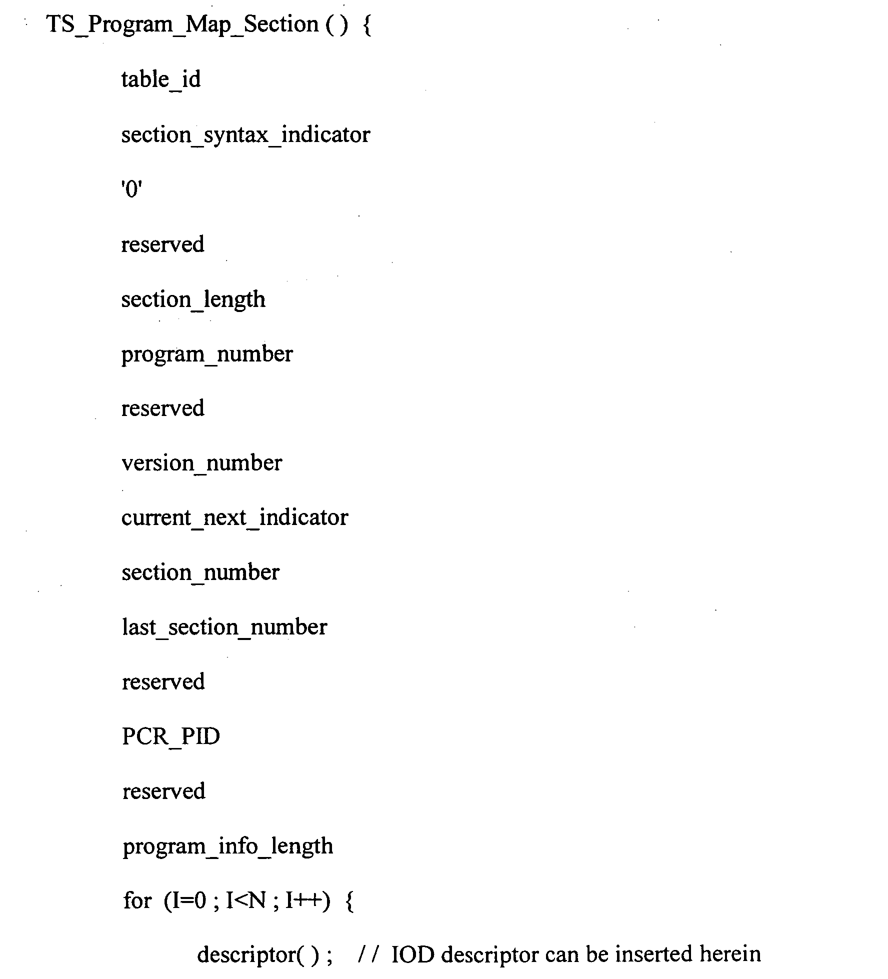

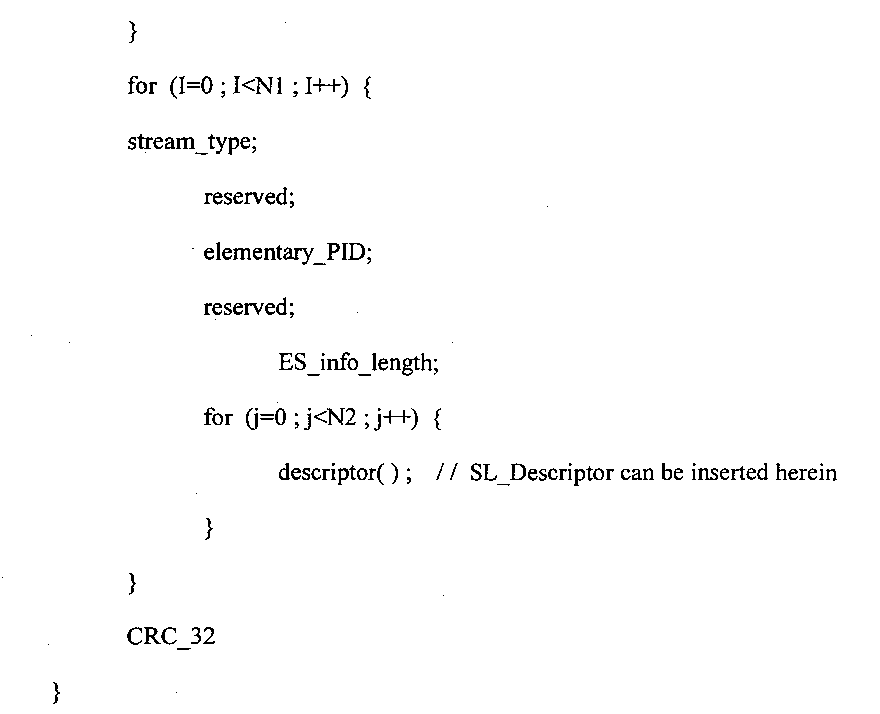

In the DMB transmitter according to the present invention, when the MPEG4-encoded data is packetized using a method defined by the MPEG2 system, the IOD descriptor and the Sync Layer descriptor (SL_descriptor) defined in the MPEG4 may be included in a set position of the PMT syntax.

As described above, the DMB receiver according to the present invention receives DMB signals from the DMB transmitter, which includes an MPEG4 system including an ES_Descriptor of an audio object and an ES_Descriptor of a visual object at a set position in an Initial Object Descriptor (IOD) syntax and an MPEG2 system including the IOD in a program Specific Information (PSI) table and transmitting the IOD included in the PSI table. The DMB receiver is formed of an MPEG2 system parsing the PSI table from the DMB signals, and extracting the information on an audio stream and a visual stream by using the ES_Descriptor of the audio object and the ES_Descriptor of the visual object of the IOD within the parsed PSI table.

Occasionally, the DMB receiver according to the present invention may further be included in Eureka-147 system performing frequency/time deinterleaving and error correction decoding of the received DMB signals, and outputting the decoded DMB signals to the MPEG2 system.

The DMB receiver according to the present invention receives the DMB signals and performs the frequency/time deinterleaving and the error correction decoding processes. Then, the DMB receiver parses the PMT through the error correction decoded DMB signals, and extractes information on an audio stream and a visual stream by using the ES_Descriptor of the audio object and the ES_Descriptor of the visual object of the IOD in the parsed PSI table. Subsequently, the DMB receiver outputs the divided audio stream and visual stream for display.

More specifically, the MPEG2 system of the DMB receiver according to the present invention parses the IOD included in the PMT, thereby identifying the currently received stream as one of the visual stream and the audio stream through the ES_Descriptor of the audio object and the ES_Descriptor of the visual object included in the IOD. Therefore, the MPEG2 system can divide the audio stream and the visual stream from a current stream through a demultiplexing process using the ES_Descriptor of the audio object and the ES_Descriptor of the visual object. Furthermore, the divided audio stream and visual stream can be decoded to a corresponding algorithm from each of the corresponding decoders. Therefore, the user can view MPEG4-encoded audio and video data through a DMB receiver that does not entirely support the MPEG4 system.

The device and method for receiving and transmitting digital multimedia broadcasting have the following advantages.

Since the DMB receiver according to the present invention can decode the MPEG4-encoded A/V signals and display the decoded signals through the MPEG2 system without requiring the use of an MPEG4 system, which supports the parsing of the OD or SD information, thereby reducing the product cost of the DMB receiver.

Also, the present invention is effective and useful to users who wish to simply and easily use MPEG4-encoded A/V services through their mobile phones or PDAs having a low priced DMB receiver therein.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

The claims refer to examples of preferred embodiments of the invention. However, the invention also refers to combinations of any claim or claims with any other claim or claims and/or with any feature or combination of features which is or are disclosed in the description and/or in the drawings.

## Claims

1. A digital multimedia broadcasting transmitting device, comprising:
an MPEG4 system including at least one of an ES_Descriptor of an audio object and an ES_Descriptor of a visual object at a set position of an Initial Object Descriptor (IOD) syntax, and encoding data indicated by the IOD using MPEG4 compression algorithms; and
an MPEG2 system including the IOD in a Program Specific Information (PSI) table, and encoding the PSI table and data received from the MPEG4 system into an MPEG2 mode and transmitting the MPEG2-encoded data.

2. The transmitting device according to claim 1, wherein the ES_Descriptor of the audio object and the ES_Descriptor of the visual object are included in an ES_Descriptor field of the IOD syntax.

3. The transmitting device according to claim 1, wherein the IOD syntax further includes at least information on an audio stream and information on a visual stream.

4. The transmitting device according to claim 3, wherein the Scene Descriptor (SD) stream includes a Binary Format for Scene Description (BIFS) having information on an interactive content representation method allowing interaction with a user.

5. The transmitting device according to claim 1, wherein the PSI table further comprises a Sync Layer (SL) Descriptor.

6. The transmitting device according to claim 1, wherein the PSI table is a Program Map Table (PMT).

7. The transmitting device according to claim 1, wherein the MPEG2 system transmits the data through an orthogonal frequency division multiplexing (OFDM) method.

8. A digital multimedia broadcasting (DMB) receiving device receiving DMB signals from a DMB transmitting device, which includes an MPEG4 system including at least one of an ES_Descriptor of an audio object and an ES_Descriptor of a visual object at a set position of an Initial Object Descriptor (IOD) syntax, and an MPEG2 system including the IOD in a Program Specific Information (PSI) table, the digital multimedia broadcasting receiving device comprising:
an MPEG2 system parsing the PSI table from the DMB signals, and extracting the information on an audio stream and a visual stream by using the ES_Descriptor of the audio object and the ES_Descriptor of the visual object of the IOD within the parsed PSI table.

9. The receiving device according to claim 8, further comprising Eureka-147 system performing frequency/time deinterleaving and error correction decoding of the received DMB signals, and outputting the decoded DMB signals to the MPEG2 system.

10. A transmitting method of a digital multimedia broadcasting transmitting device, which includes an MPEG4 system including at least one of an ES_Descriptor of an audio object and an ES_Descriptor of a visual object at a set position of an Initial Object Descriptor (IOD) syntax, and an MPEG2 system including the IOD in a Program Specific Information (PSI) table, the transmitting method comprising:
including at least one of an ES_Descriptor of an audio object and an ES_Descriptor of a visual object at a set position of an Initial Object Descriptor (IOD) syntax;
encoding data indicated by the IOD using MPEG4 compression algorithms; and
including the IOD in a Program Specific Information (PSI) table, and encoding the PSI table and data received from the MPEG4 system into an MPEG2 mode and transmitting the MPEG2-encoded data.

11. The transmitting method according to claim 10, wherein the ES_Descriptor of the audio object and the ES_Descriptor of the visual object are included in an ES_Descriptor field of the IOD syntax.

12. The transmitting method according to claim 10, wherein the IOD syntax includes at least information on an Object Descriptor (OD) stream, information on a Scene Descriptor (SD) stream, information on an audio stream, and information on a visual stream.

13. The transmitting method according to claim 12, wherein the Scene Descriptor (SD) stream includes a Binary Format for Scene Description (BIFS) having information on an interactive content representation method allowing interaction with a user.

14. The transmitting method according to claim 10, wherein the PSI table further comprises a Sync Layer (SL) Descriptor.

15. The transmitting method according to claim 10, wherein the PSI table is a Program Map Table (PMT).

16. The transmitting method according to claim 10, wherein the MPEG2 system transmits the data through an orthogonal frequency division multiplexing (OFDM) method.

17. A receiving method of digital multimedia broadcasting (DMB) receiving device receiving DMB signals from a DMB transmitting device, which includes an MPEG4 system including at least one of an ES_Descriptor of an audio object and an ES_Descriptor of a visual object at a set position of an Initial Object Descriptor (IOD) syntax, and an MPEG2 system including the IOD in a Program Specific Information (PSI) table, the receiving method comprising:
parsing the PSI table from the DMB signals;
extracting the information on an audio stream and a visual stream by using the ES_Descriptor of the audio object and the ES_Descriptor of the visual object of the IOD within the parsed PSI table; and
outputting the divided audio stream and visual stream, so as to be displayed.

18. The receiving method according to claim 17, further comprising, prior to the parsing the PSI table from the DMB signals, receiving the DMB signals and performing frequency/time deinterleaving and error correction decoding of the received DMB signals.
